# EUROPEAN PATENT APPLICATION

(11) **EP 3 101 288 A1**
(43) Date of publication of application: **07.12.2016**
(21) Application number: 16164862.1
(22) Date of filing: 12.04.2016
(51) Int. Cl.: F16B 23/00, B25B 15/00

(54) **METHODS AND APPARATUS FOR ASYMMETRICAL FASTENING SYSTEM**

(30) Priority: 03.06.2015 US 201514729367
(71) Applicant: Bryce Fastener, Inc., Gilbert, AZ 85233 (US)
(72) Inventor: CAMPBELL II, Richard Bryce, GILBERT, AZ Arizona 85298 (US)
(74) Representative: Thibon, Laurent

(57) **Abstract**

An asymmetrical fastening system (100) according to aspects of the present technology includes a driver (102) configured with conforming surfaces suitably adapted to provide enhanced engagement between a wall of the driver and a recessed socket area of a Torx® type fastener. The driver may comprise a driving wall (804) that forms a substantially flat surface set at an angle relative to a radial line extending from a longitudinal axis while also tapering towards the longitudinal axis between a base portion and an end portion. The driver may further comprise a removal surface (1112) that tapers away from the driving wall. The technology may also include a corresponding mating fastener (104) configured with mating surfaces to the driver to provide enhanced engagement between the driver and mating fastener such that the driver may wedge into the mating fastener to create "stick fit" between the driver and mating fastener.

## Description

### BACKGROUND

Presently fasteners are made with various recesses and matched driving tools such as the Phillips design, straight walled hexagon, and other multi-lobe geometries. The walls and faces of the driver and recess typically are designed to fit closely with each other to achieve face-to-face (mating) contact between the driving member and driven surfaces of the fastener. However, to enable insertion of the driver into the recess, there must be some clearance between the driver and the recess of the fastener. As a result, the area of contact is typically less than full face-to-face contact between the driver and the recess of the fastener. Consequently, when torque is applied by the driver, the forces applied to the fastener head and driver are concentrated in localized stress regions. These localized stresses may lead to deformation to the driver or fastener, breakage of the driver, and premature cam-out of the fastener. Efforts to increase the area of contact between the driver and the fastener typically result in increasing face-to-face contact along linear lines. This may provide some increased contact area, but it often creates localized stress and fatigue which can weaken or cause premature wear of the driver.

### SUMMARY

Methods and apparatus for an asymmetrical fastening system according to aspects of the present technology include a driver configured with conforming surfaces suitably adapted to provide enhanced engagement between a wall of the driver and a recessed socket area of a multi-lobed fastener. The driver may comprise a driving wall that forms a contact area, which is for example substantially flat, set at an angle relative to a radial line extending from a longitudinal axis while also tapering towards the longitudinal axis between a base portion and an end portion. The driver may further comprise a removal surface that tapers away from the driving wall. The technology may also include a corresponding mating fastener configured with mating surfaces to the driver to provide enhanced engagement between the driver and mating fastener such that the driver may wedge into the mating fastener to create "stick fit" between the driver and mating fastener.

According to one aspect, there is provided a fastening device having a head portion with a socket area extending into the head portion and a shank sharing a longitudinal axis with the socket area, comprising: a wall defining the recessed socket area having a top edge and a bottom edge, wherein the wall tapers inward between about one and five degrees towards the longitudinal axis from the top edge to the bottom edge such that a cross-sectional area of the socket area decreases from the top edge to the bottom edge; and a plurality of socket torque surfaces disposed along the wall, wherein each socket torque surface comprises: a driving surface disposed along a first side of the socket torque surface and extending between the top edge and the bottom edge, wherein the driving surface comprises a contact area, for example substantially flat, angled between about five degrees and about twenty-five degrees relative to a radial line extending outward from the longitudinal axis through a leading edge of the driving surface at the top edge; a removal surface disposed along a second side of the socket torque surface and extending between the top edge and the bottom edge, wherein: the removal surface tapers away from the of the driving surface at the top edge; and the removal surface is separated from the driving surface by a shorter distance at the bottom edge than at the top edge relative to the leading edge of the driving surface at the top edge.

According to a further aspect, there is provided a driver for a fastening device, comprising: a sidewall extending between a base portion of the driver and an end portion of the driver, wherein the sidewall tapers inward from the base portion to the end portion towards a longitudinal axis of the driver by an angle of between about one degree and about five degrees; and a plurality of fins extending outward from the sidewall, wherein each fin comprises: a driving face disposed along a first side of the fin between the base portion and the end portion, wherein the driving face comprises a contact area, for example substantially flat, angled between about five degrees and about twenty-five degrees relative to a radial line extending outward from the longitudinal axis of the driver to a leading edge of the driving face; a removal face disposed along a second side of the fin between the base portion and the end portion, wherein: the removal face tapers away from the leading edge of the driving face; and the removal face is separated from the driving wall by a greater distance at the base portion than at the end portion relative to the leading edge of the driving face.

### BRIEF DESCRIPTION OF THE DRAWINGS

A more complete understanding of the present invention may be derived by referring to the detailed description when considered in connection with the following illustrative figures. In the following figures, like reference numbers refer to similar elements and steps throughout the figures.
Figure 1 representatively illustrates a side view of a fastener and a mating driver bit in accordance with an exemplary embodiment of the present technology;
Figure 2 representatively illustrates a side view of the fastener and recessed socket area in accordance with an exemplary embodiment of the present technology;
Figure 3 representatively illustrates a top view of the fastener having six recessed torque surfaces in accordance with an exemplary embodiment of the present technology;
Figure 4 representatively illustrates a detailed view of the recessed socket area of a fastener having seven recessed torque surfaces in accordance with an exemplary embodiment of the present technology;
Figure 5A representatively illustrates a partial cross-sectional view of the recessed torque surfaces at a top edge of the recessed socket area in accordance with an exemplary embodiment of the present technology;
Figure 5B representatively illustrates a partial cross-sectional view of the recessed torque surfaces at a position between the top edge and a bottom edge of the recessed socket area in accordance with an exemplary embodiment of the present technology;
Figure 5C representatively illustrates a partial cross-sectional view of the recessed torque surfaces at the bottom edge of the recessed socket area in accordance with an exemplary embodiment of the present technology;
Figure 6 representatively illustrates a recessed counter bore in accordance with an exemplary embodiment of the present technology;
Figure 7 representatively illustrates the driver bit in accordance with an exemplary embodiment of the present technology;
Figure 8 representatively illustrates a cross-sectional view of the driver bit across line A-A in accordance with an exemplary embodiment of the present technology;
Figure 9 representatively illustrates a side view of a drive wall and a removal wall of the driver in accordance with an exemplary embodiment of the present technology;
Figure 10A representatively illustrates a prior art fastener design;
Figure 10B representatively illustrates a prior mating driver bit design for the fastener shown in Figure 10A;
Figure 10C representatively illustrates the driver positioned within the fastener shown in Figures 10A and 10B;
Figure 10D representatively illustrates the driver of Figure 10B under a torque force;
Figure 11 representatively illustrates a perspective view of a driver bit in accordance with an alternative embodiment of the present technology;
Figure 12 representatively illustrates a side view of the driver bit in accordance with an alternative embodiment of the present technology;
Figure 13 representatively illustrates a top view of the driver shown in Figure 10 in accordance with an alternative embodiment of the present technology;
Figure 14 representatively illustrates a detailed view of a drive wall and a removal wall of the driver shown in Figure 10 in accordance with alternative embodiment of the present technology;
Figure 15 representatively illustrates a cross-sectional view of the driver bit across line 15-15 of Figure 12 in accordance with an alternative embodiment of the present technology;
Figure 16 representatively illustrates a cross-sectional view of the driver bit across line 16-16 of Figure 12 in accordance with an alternative embodiment of the present technology;
Figure 17 representatively illustrates a cross-sectional view of the driver bit across line 17-17 of Figure 12 in accordance with an alternative embodiment of the present technology;
Figure 18 representatively illustrates a top view of a fastener and recessed socket area in accordance with an alternative embodiment of the present technology;
Figure 19 representatively illustrates a detailed view of a driving surface and a removal surface of the fastener shown in Figure 13 in accordance with alternative embodiment of the present technology; and
Figure 20 is a flow chart for forming a fastener system in accordance with an exemplary embodiment of the present invention.

### DETAILED DESCRIPTION OF EXEMPLARY EMBODIMENTS

The present invention may be described in terms of functional block components and various processing steps. Such functional blocks may be realized by any number of components configured to perform the specified functions and achieve the various results. For example, the present technology may employ various types of materials, fastening devices, driver systems and the like, which may carry out a variety of functions. In addition, the present technology may be practiced in conjunction with any number of processes such as the manufacture of fasteners, mechanical attachment, and torque transmitting systems, and the system described is merely one exemplary application for the invention. Further, the present technology may employ any number of conventional techniques for metalworking, component manufacturing, tooling fabrication, and/or forming surfaces.

Methods and apparatus for an asymmetrical fastening system according to various aspects of the present technology may operate in conjunction with any suitable torque delivery system. Various representative implementations of the present technology may also be applied to any device capable of rotating fasteners.

As used herein, the word "about", preceding a value, indicates a tolerance of plus or minus 10 percent of the value in question.

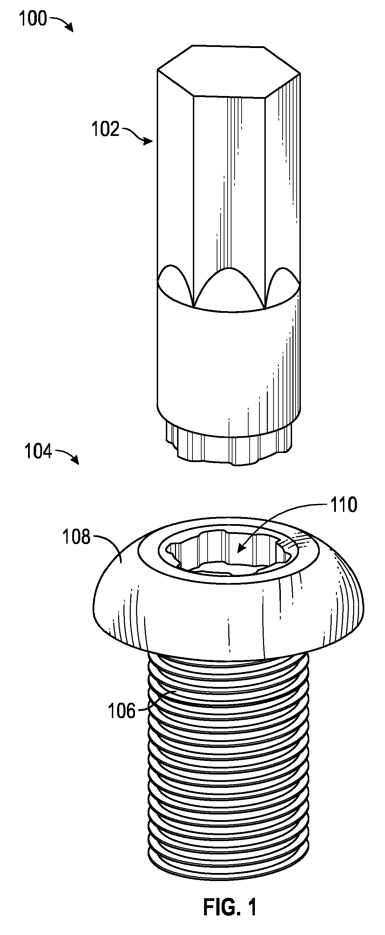

Referring now to Figure 1, in one embodiment of the present claims, an asymmetrical fastening system 100 may comprise a driver 102 and a fastener 104 having a shank portion 106 and a head portion 108. The driver 102 may comprise any suitable device or system for mating with the fastener 104 to facilitate a transfer of torque from the driver 102 to the fastener 104. For example, the driver 102 may comprise a multi-lobular surface configured to be selectively inserted into a recessed socket area 110 of the fastener 104 and engage a surface of the recessed socket area 110 that is suitably configured to substantially conform to the multi-lobular surface of the driver 102. The engagement between the driver 102 and the fastener 104 may create sufficient surface contact to couple the driver 102 and the fastener 104 together through a compressed or "stick fit" such that the fastener 104 does not fall off or otherwise automatically disengage from the driver 102 after the driver 102 has been inserted into the recessed socket area 110 of the fastener 104.

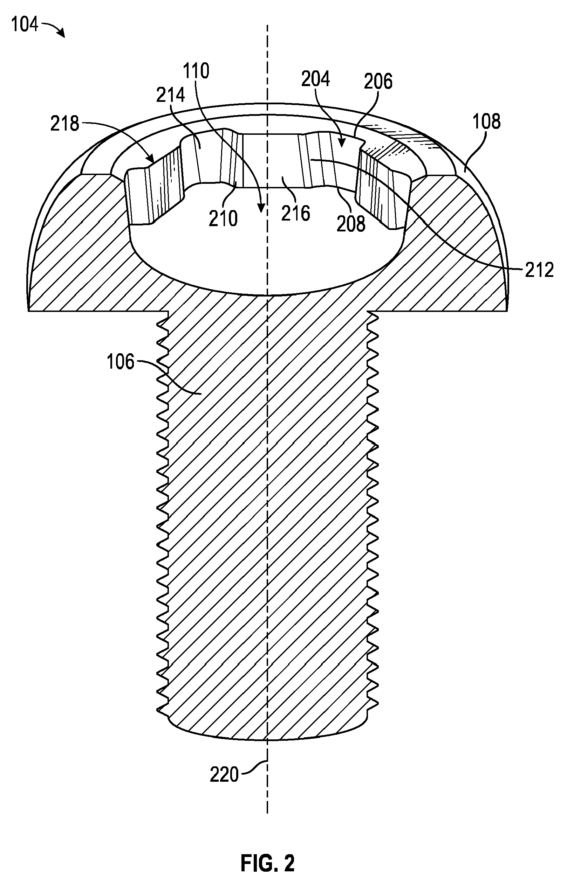

The fastener 104 is configured to provide increased face-to-face contact between the recessed socket area 110 and the driver 102. The fastener 104 may comprise any suitable device or system for providing a substantially conforming fit with the driver 102. For example, referring now to Figure 2, the recessed socket area 110 may comprise a wall 218 extending into the head portion 108 of the fastener 104. The wall 218 may be configured in any suitable shape or dimension for receiving the driver 102 and may include one or more surfaces adapted to allow for the transfer of torque between the driver 102 and the fastener 104.

Referring now to Figures 2, 3, and 18, in one embodiment, the wall 218 may comprise a surface oriented about a longitudinal axis 220 that defines the recessed socket area 110. The wall 218 may comprise a top edge 206 that forms an opening to the recessed socket area 110 and a bottom edge 208 disposed proximate to a lower most section of the recessed socket area 110. The wall 218 may taper inwardly towards the longitudinal axis 220 between the top edge 206 and the bottom edge 208 such that a cross-sectional area of the recessed socket area 110 decreases as the recessed socket area 110 extends further into the head portion 108. The taper may also correspond to the dimensions of the driver 102 to facilitate a wedge-like fit between the fastener 104 and the driver 102.

The taper of the wall 218 may comprise any suitable angle based upon varying criteria such as circumference of the head portion 108, height of the head portion 108, and/or the strength of the material used to fabricate the fastener 104 or the driver 102. For example, in one embodiment, the wall 218 may have a taper of between one and five degrees relative to the longitudinal axis 220. In a second embodiment, the taper may comprise an angle of up to fifteen degrees relative to the longitudinal axis 220.

The wall 218 may further comprise one or more recessed torque surfaces 204 or socket torque surfaces 1802 arranged around the wall 218. The recessed torque surfaces 204 and socket torque surfaces 1802 provide contact surfaces for the driver 102 allowing the fastener 104 to be selectively rotated about the longitudinal axis 220 in a first direction under a driving force and in a second direction under a removal force. For example, the driving force may comprise an installation torque supplied by any suitable device such as a screw driver, a wrench, a powered drill, and the like. Similarly, the removal force may comprise a torque supplied in a substantially opposite direction as the driving force.

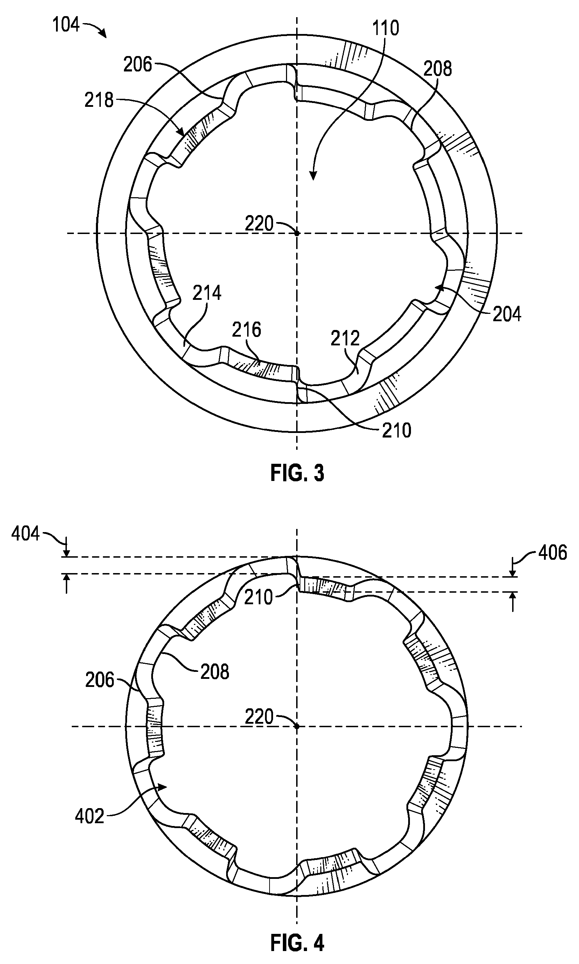

In one embodiment, the recessed torque surfaces 204 and socket torque surfaces 1802 may comprise a plurality of asymmetrical lobular recesses suitably configured to receive a mating lobe or fin from the driver 102. Referring now to Figures 2 and 3, in a first embodiment, each recessed torque surface 204 may comprise a driving surface 210, a removal surface 212, and a first transition surface 214 extending between the driving surface 210 and the removal surface 212. The wall 218 may form a second transition surface 216 that extends between the driving surface 210 of a first recessed torque surface 204 and the removal surface 212 of a second recessed torque surface 204.

The plurality of recessed torque surfaces 204 may comprise any desired number and may be oriented about the longitudinal axis 220. The number of recessed torque surfaces 204 may be determined according to any suitable criteria such as a predetermined torque requirement for a particular use. For example, referring now to Figure 3, in one embodiment, the plurality of recessed torque surfaces 204 may comprise six asymmetrical lobular recesses spaced equidistantly around a circumference defined by a radial line from the longitudinal axis 220. Referring now to Figure 4, in a second embodiment, the plurality of recessed torque surfaces 204 may comprise seven asymmetrical lobular recesses spaced equidistant apart around a common circumferential distance from the longitudinal axis 220.

The driving surface 210 provides a contact area for receiving an applied torque from the driver 102. The driving surface 210 may be configured to comprise any suitable shape or dimension. Referring again to Figures 2 and 3, in one embodiment, the driving surface 210 may comprise a substantially flat face that is configured to be oriented perpendicular to the driving force such that the face of the driving surface 210 is substantially parallel to a radial line extend from the longitudinal axis 220. The driving surface 210 may also be configured to receive the driving force at a substantially 90° degree angle. The driving surface 210 may intersect the first transition surface 214 and/or the second transition surface 216 at an approximate right angle such that the driving surface 210 forms a substantially vertical surface between the first transition surface 214 and the second transition surface 216.

The driving surface 210 may also remain approximately parallel along an insertion direction of the fastener 104 from the top edge 206 to the bottom edge 208 of the recessed socket area 110 even as the wall 218 tapers inward. As a result, the driving surface 210 forms a large contact area that may be engaged by the driver 102 during engagement. The large contact area allows an applied torque to be more evenly distributed across the entire driving surface and may allow for increased torque values while also being less susceptible to cam-out.

The driving surface 210 may also be configured to comprise a uniform lobular height along the entire surface from the top edge 206 to the bottom edge 208 of the recessed socket area 110. For example, referring now to Figure 4, in one embodiment, the driving surface 210 of a first recessed torque surface 402 may have a lobular height 404 at the top edge 206 that is the same as a second lobular height 406 at the bottom edge 208. Therefore, although the wall 218 is tapering inward the driving surface 210 forms a substantially rectangular planar surface that remains perpendicular to the driving force.

The removal surface 212 provides a second contact area for receiving an applied torque from the driver 102. The removal surface 212 may be configured to comprise any suitable shape or dimension. Referring again to Figures 2 and 3, in one embodiment, the removal surface 212 may comprise a face that is configured to be oriented in a non-parallel manner relative to the driving surface 210. In addition, the removal surface 212 may not be aligned with the longitudinal axis 220 and may intersect a radial line extending from the longitudinal axis 220 at an oblique angle. For example, the removal surface 212 may intersect with the first transition surface 214 and the second transition surface 216 through corner sections having a larger radius as compared to corner sections between the driving surface 210 and the first transition surface 214 and the second transition surface 216. Accordingly, the removal surface 212 may comprise a more gradual sloping surface between first transition surface 214 and the second transition surface 216 as compared to the driving surface 210.

Utilizing larger radiuses at the removal surface 212 may provide extra strength and resistance to shearing along the entire recessed torque surface 204. Thus the fastener 104 may be subjected to higher torque values with less chance of stripping out the recessed torque surfaces 204. For example, Phillips type fasteners have a large flat area perpendicular to the screw insertion direction and a large flat area perpendicular to the removal direction. This arrangement may be highly susceptible to cam out and driver deformation and/or breakage.

Referring now to Figure 2, the removal surface 212 may also form a non-vertical line relative to the longitudinal axis 220 as it extends from the top edge 206 to the bottom edge 208 of the recessed socket area 110. In one embodiment, the non-vertical line may lie on an angle that causes the first transition surface 214 to become progressively smaller as it descends toward the bottom edge 208 of the recessed socket area 110. In addition, as a result of the reduction in size of the first transition surface 214 the second transition surface 216 increases in size as it descends toward the bottom edge 208 of the recessed socket area 110.

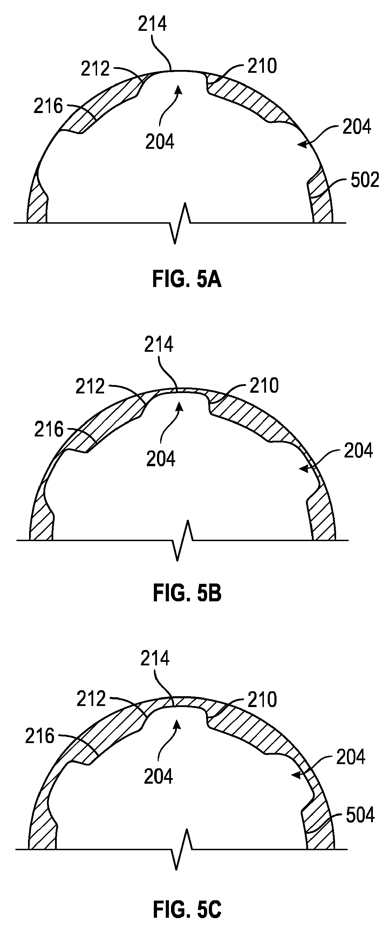

Referring now to Figure 5A, the driving surface 210, the removal surface 212, and the first transition surface 214 may form a lobular polygonal shape in the recessed torque surfaces 204 such that the second transition surface 216 is positioned at a first inner diameter 502 at the top edge 206. The removal surface 212 may be formed with larger radiuses than the driving surface 210 making the entirety of the recessed torque surfaces 204 asymmetrical. Referring now to Figure 5B, as the driving surface 210, the removal surface 212, the first transition surface 214, and the second transition surface 216 progress to a position between the top edge 206 and the bottom edge 208 of the recessed socket area 110, each surface tapers inwardly closer to the central longitudinal axis 220 such that the polygonal shape of the recessed torque surfaces 204 have a smaller area than at the top edge 206. Referring now to Figure 5C, as the driving surface 210, the removal surface 212, the first transition surface 214, and the second transition surface 216 progress to the bottom edge 208 of the recessed socket area 110, each surface continues to taper inwardly towards the central longitudinal axis 220 such that the polygonal shape of the recessed torque surfaces 204 have a smaller area at the bottom edge 208 than at the position between the top edge 206 and the bottom edge 208 of the recessed socket area 110. Further, the second transition surface 216 is now position at a second inner diameter 504 that is less than the first inner diameter 502. Throughout the taper from the first inner diameter 502 to the second inner diameter 504, the lobular height of the driving surface 210 remains constant.

A width of the driving surface 210, the removal surface 212, the first transition surface 214, and the second transition surface 216 may be reduced at different rates as each proceeds towards the bottom edge 208 of the recessed socket area 110 making the polygonal shape disproportionate. For example, the removal surface 212 and the first transition surface 214 may be reduced disproportionately compared to the driving surface 210, which may remain proportional between the top edge 206 and the bottom edge 208. Thus as the polygonal shape progresses to the bottom of the recessed socket area 110, the width of the recessed torque surfaces 204 gets smaller, having disproportional material removed below the removal surface 212 and the first transition surface 214. This causes the removal surface 212 to inscribe a line as it proceeds from the top edge 206 to the bottom edge 208, that tapers away from the driving face; being farther away at the top edge 206 and closer at the bottom edge 208. This further causes a width of the second transition surface 216 to increase as the width of the recessed torque surfaces 204 decreases. The resulting shape may create a wedge ramp configured to propel the driver 102 towards the driving surface 210 and improve an overall face-to-face contact when the driver 102 is fully inserted into the recessed socket area 110.

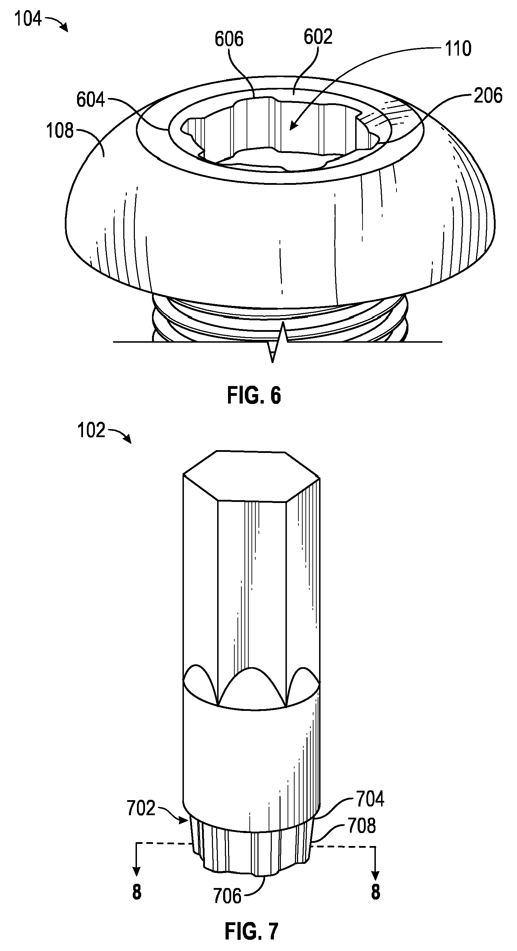

Referring now to Figure 6, the head portion 108 may further comprise a radiused counter bore 602 configured to help funnel the driver 102 towards the recessed socket area 110. The radiused counter bore 602 may comprise any suitable shape adapted to capture a driver bit and guide it to the recessed socket area 110. For example, in one embodiment, the radiused counter bore 602 may comprise an inward sloping surface having a larger radius along a surface 604 of the head portion 108 and a smaller radius along a second surface 606 disposed between the top edge 206 and the surface 604 of the head portion 108.

Referring again to Figure 1, the driver 102 is configured to provide a torque force to the fastener 104. The driver 102 may comprise any suitable shape or size for engaging with the fastener 104. For example, the driver 102 may comprise a surface suitably configured to engage or otherwise substantially conform to the surfaces located within the recessed socket area 110. In one embodiment, the driver 102 may be adapted to provide a stick-fit when inserted into recessed socket area 110 such that the surface frictional forces between the driver 102 and the recessed socket area 110 of the fastener 104 are sufficient to couple the driver 102 and the fastener 104 together.

Referring now to Figure 7, in one embodiment, the driver 102 may comprise a torque surface 702 having a tapered sidewall 708 that extends between a base portion 704 of the driver 102 and an end portion 706 of the driver 102. The tapered sidewall 708 may comprise the same angle of taper as the wall 218 of the recessed socket area 110 so as to provide a more complete engagement. In addition, a distance between the base portion 704 and the end portion 706 may also be configured to correspond to the distance between the top edge 206 and the bottom edge 208 of the recessed socket area 110. In an alternative embodiment, the distance between the base portion 704 and the end portion 706 may be greater than or less than that of top edge 206 and the bottom edge 208 to ensure sufficient engagement between the driver 102 and the fastener 104 while also accommodating additional features such as a metallic plating or other surface treatment that may be applied to the fastener 104 and result in a decrease to the overall diameter of the recessed socket area 110.

For example, in one embodiment the fastener may comprise a surface coating configures to increase corrosion resistance of the fastener. The application of the surface coating may provide a plating thickness of up to approximately a thousandth of an inch (.001") to the entire outer surface of the fastener 104. As a result, the diameter of the recessed socket area 110 may be decreased by approximately two thousandths of an inch (.002"). In another embodiment, the plating thickness may be approximately three ten thousandths of an inch (.0003") resulting in a decreased diameter of the recessed socket area 110 of about six ten thousandths of an inch (.0006"). To account for this decrease, the distance between the base portion 704 and the end portion 706 may be increased such that the end portion 706 of the torque surface 702 has a radius less than that of the bottom edge 208 of the fastener before the surface coating was applied.

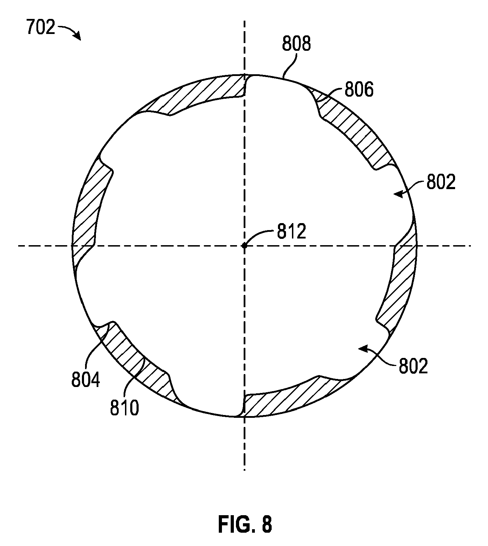

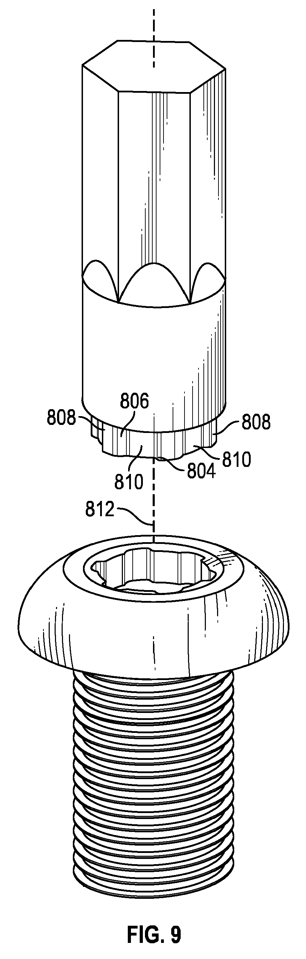

Referring now to Figures 8 and 9, the torque surface 702 may further comprise a plurality of lobes 802 that extend outward from a surface of the torque surface 702. The plurality of lobes 802 may be oriented around an axis 812 of the driver 102 that corresponds to the longitudinal axis 220 of the fastener 104 when the torque surface 702 is aligned with the recessed socket area 110.

Each lobe 802 may comprise a driving wall 804, a removal wall 806, and a first transition wall 808 extending between the driving wall 804 and the removal wall 806. The torque surface may also comprise a second transition wall 810 extending between the driving wall 804 of a first lobe 802 and the removal wall 806 of a second lobe 802. Each of these walls may be suitably configured to mate to a corresponding surface of the fastener 104. For example, the driving wall 804 may comprise a constant lobular height from the base portion 704 to the end portion 706 that equals the lobular height of the driving surface 210. In addition, the driving wall 706may be configured to be aligned with the axis 812 of the driver 102 such that there is substantially complete face-to-face contact between the driving wall 804 and the driving surface 210 during engagement. This allows the driving force to be spread across a larger area than is achievable through known fastener systems that only provide localized contact between the driving surface and a corresponding surface within the fastening device.

Similarly, the removal wall 806 may be configured to have the same dimensions as the removal surface 212 such that there is substantially complete face-to-face contact between the removal wall 806 and the removal surface 212 during engagement. For example, the removal wall 806 may form a non-vertical line relative to the axis 812 of the driver 102 as it extends from the base portion 704 to the end portion 706 in an equivalent manner to the removal surface 212. The non-vertical line may lie on an angle that causes the first transition wall 808 to become progressively smaller as it descends toward the end portion 706. Likewise, as the driving wall 804, the removal wall 806, the first transition wall 808, and the second transition wall 810 progress to the end portion 706 of the torque surface 702, each surface tapers inwardly towards the central longitudinal axis 220 such that the polygonal shape of the lobes 802 have a smaller area at the end portion 706 than at the base portion 704.

The end result is that the torque surface 702 tapers the same in every dimension as the recessed socket area 110 and is the same size at every corresponding position to the recessed socket area 110. Accordingly, when the driver 102 is inserted into the recessed socket area 110, substantially the entirety of the torque surface 702 is in contact with every surface of the recessed socket area 110 both longitudinally and horizontally. The similar geometry allows the torque surface 702 to be wedged into the recessed socket area 110 to create a substantially 100% wedged fit between the driver 102 and the fastener 104 in all directions.

This wedged fit may further align the driver 102 and the fastener 104 during use by reducing tolerances between the torque surface 702 and the recessed socket area 110. Reduced tolerances may result in a decreased likelihood that the driver 102 may wobble within the recessed socket area 110 when the driving force or removal force is being applied which reduces the chances of cam out and/or disengagement. The wedge fit during use may also decrease plastic deformation on the driver wall 804, the driver surface 210, the removal wall 806, and/or the removal surface 212 which results in decreased wear on the torque surface 702 and the recessed socket area 110.

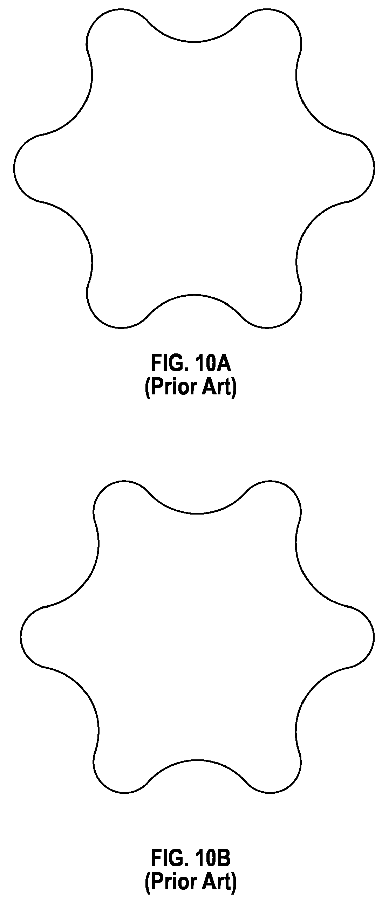

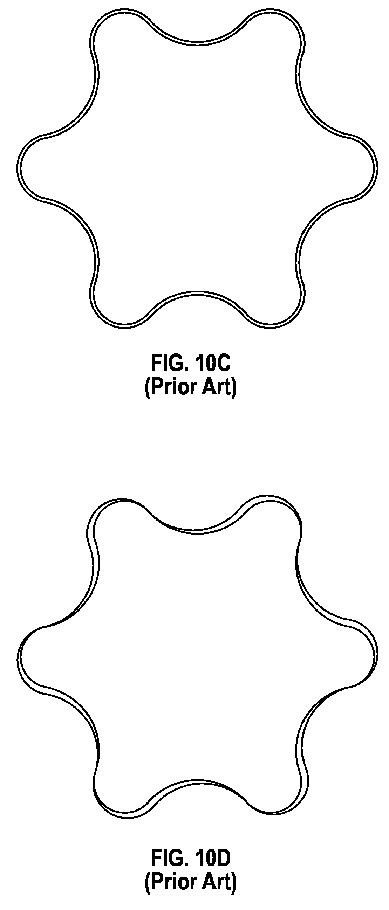

In an alternative embodiment, the asymmetrical fastening system 100 may be suitably configured to work with pre-existing systems such as the Torx® style fastener. Existing fastening systems of this type tend to have a significant amount of gaps between the driver and the "mating" screw. For example, referring now to Figures 10A-10D, a common T30 Torx® fastener may have a recessed torque surface having a width of 0.03864 inches while the fins of the "mating" T30 driver may have a fin width of 0.03382 inches. As a result, when the driver is inserted into the recessed socket opening of the fastener none of the torque surfaces touch each other. Accordingly, it is only once the driver is rotated to apply a torque force to the fastener that the surfaces of the driver come into contact with the surfaces of the fastener. This results in a narrow point of contact over which the torque force is being applied to the fastener. These point loads on both the driver can result in increased rates of wear and/or breakage of the driver during use.

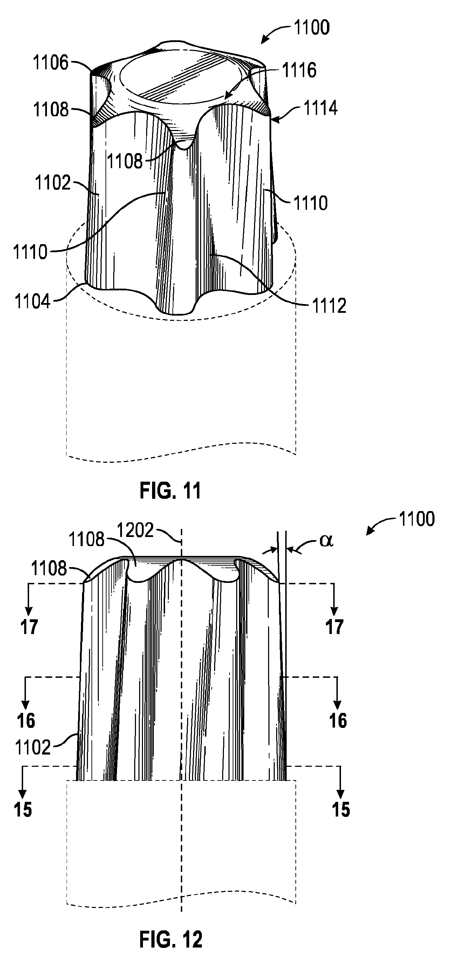

Referring now to Figures 11-17, in this alternative embodiment, the driver 1100 may comprise a tapered sidewall 1102 that extends between a base portion 1104 of the driver 1100 and an end portion 1106 of the driver 1100. The tapered sidewall 1102 may angle towards a longitudinal axis 1202 by any suitable amount. For example, referring now to Figure 12, the taper towards the longitudinal axis 1202 may comprise an angle α of between about one degree and five degrees relative to the longitudinal axis 1202. The tapered sidewall 1102 may help wedge the driver into the socket area of the fastener due to the substantially vertical sidewalls used in the Torx® system.

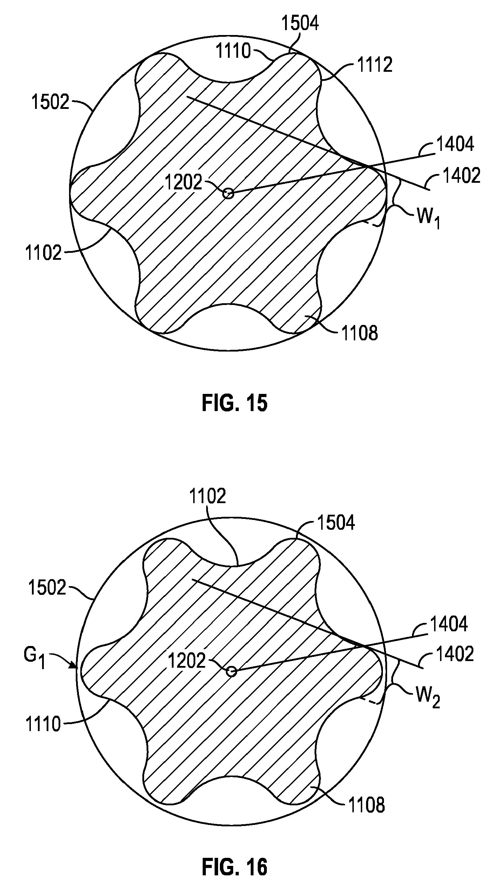

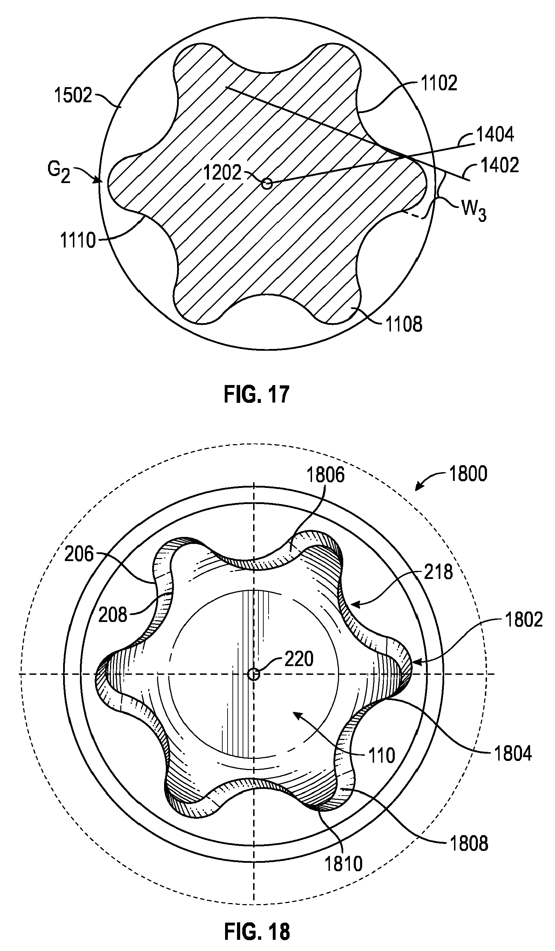

As a result of the tapered sidewall 1102, the end portion 1106 of the driver 1100 may comprise a smaller cross-sectional area than the socket area 110 while the base portion 1104 of the driver may comprise a larger cross-sectional area than the socket area 110. For example, referring now to Figure 15, an outermost portion of the tapered sidewall 1102 at the base portion 1104 may comprise a circumference 1502, wherein each fin 1108 extends outward to the circumference 1502. Referring now to Figure 16, as the tapered sidewall 1102 progresses towards a mid-point between the base portion 1104 and the end portion 1106, a first gap G₁ may exist between the circumference 1502 and each fin 1108. Referring now to Figure 17, at the end portion 1106, a second gap G₂ that is greater than the first gap G₁ may exist such that each fin 1108 is separated from the circumference 1502 by a greater amount than at the mid-point.

The result would be that at one or more points between the base portion 1104 and the end portion 1106, the tapered sidewall 1102 would wedge against the socket area 110 reducing an ability of the driver 1100 to rotate freely within the socket area 110 without contacting the wall 218 of the recessed socket area 110. For example, in one embodiment, the end portion 1106 of the driver 1100 may comprise the same dimensions as a standard T30 Torx® bit and the base portion 1104 may comprise the same or slightly larger dimensions as the socket area of the corresponding T30 Torx® screw.

The tapered sidewall 1102 may comprise six asymmetrical fins 1108 spaced equidistantly around the longitudinal axis 1202. Each fin 1108 may comprise a modified geometry that is configured to fit into a standard Torx® style recess while providing enhanced engagement and/or surface contact between a driving face 1110 and a removal face 1112 of the driver 1100 and the recessed socket area 110 of the fastener 1800.

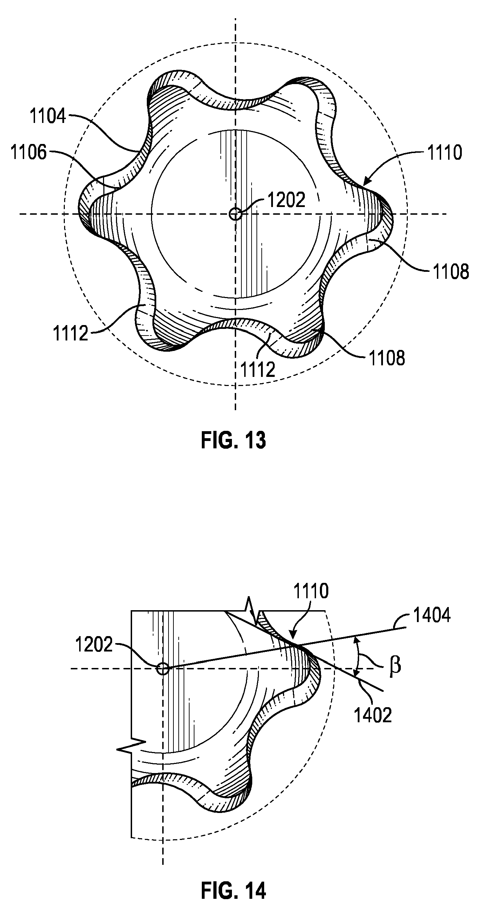

Referring now to Figures 13 and 14, the driving face 1110 may provide a substantially flat contact area forming a plane 1402 that is offset by an angle β relative to a radial line 1404 extending from the longitudinal axis 1202 to a leading edge of the driving face 1110. The angle β may comprise any suitable angle between about five degrees and about twenty-five degrees relative to the radial line 1404. In one embodiment, the angle β of the driving face 1110 may be set at about fifteen degrees. In a second embodiment, the angle β of the driving face 1110 may be set at about twelve and one-half degrees. In yet another embodiment, the angle β of the driving face 1110 may be set at about eighteen and one-half degrees.

The substantially flat contact area extends between the base portion 1104 and the end portion 1106 may form a surface of constant geometry despite the narrowing of the cross-sectional area between the base portion 1104 and the end portion 1106. For example, the substantially flat contact area may comprise a constant or uniform wall height between the base portion 1104 and the end portion 1106. When viewed from the perpendicular angle, the substantially flat contact area may appear to form a quadrilateral having a uniform height between the two end portions.

The substantially flat contact area may be formed by any suitable method or machining process. For example, referring now to Figure 15, in one embodiment, the driving face 1110 base portion 1104 may comprise an asymmetrical bulge 1504 configured to keep the driving face 1110 aligned between the base portion 1104 and the end portion 1106 despite the varying dimensions and geometries of every other surface of the tapered sidewall 1102. The overall size and/or appearance of the bulge 1504 may be smaller or less pronounced as the tapered sidewall 1102 progresses from the base portion 1104 to the end portion 1106 due at least in part to the reduction in cross-sectional area and changes in the size and shape of the remaining surfaces of the tapered sidewall 1102. For example, referring now to Figure 16, at a point positioned between the base portion 1104 and the end portion 1106, the bulge 1504 may become less pronounced as the cross-sectional area of the tapered sidewall 1102 gets reduced. Referring now to Figure 17, at the end portion 1106 the overall dimensions of the tapered sidewall 1102 may have been reduced to the point where the bulge 1504 is unnecessary to maintain the substantially flat contact area.

By maintaining the substantially flat contact area along the entire length of the driver 1100, there is an increase in surface contact between the driver 1100 and the wall 218 of the recessed socket area 110 of the fastener 104 when the driver 1100 is applying a force to tighten the fastener 104. The increased surface contact spreads the applied loads over a greater area and may prevent and/or reduce the likelihood that the driver 1100 will break during use or that the recessed socket area 110 may be prematurely worn as a result of point loading.

Referring again to Figures 11-19, the removal face 1112 tapers away from the driving face 1110 forming a curved surface extending between an outermost surface 1114 and an innermost surface 1116 of the tapered sidewall 1102. The removal face 1112 may also be configured to taper away from the driving face 1110 by a greater amount at the base portion 1104 than at the end portion 1106. As a result, a radius at the outermost surface 1114 of each fin 1108 may increase in width as the removal face 1112 progresses from the end portion 1106 to the base portion 1104.

Therefore, not only does the tapered sidewall 1102 cause a change in geometry in a direction along the longitudinal axis 1202, but each fin 1108 has a varying geometry between any two cross-sectional portions between the end portion 1106 and the base portion 1104. These changes in geometry occur in three dimensions allowing the driver 1100 to wedge a greater surface area of the tapered sidewall 1102 against the recessed socket area 110 of the fastener 1800 resulting in even further enhanced surface contact between the two devices.

This wedged fit may further align the driver 1100 and the fastener 1800 during use by reducing tolerances between the tapered sidewall 1102 and the recessed socket area 110. Reduced tolerances may result in a decreased likelihood that the driver 1100 may wobble within the recessed socket area 110 when the driving force or removal force is being applied which reduces the chances of cam out and/or disengagement. The wedge fit during use may also decrease plastic deformation on the tapered sidewall 1102, the driver face 1110, and the removal face 1112 resulting in decreased wear driver 1100.

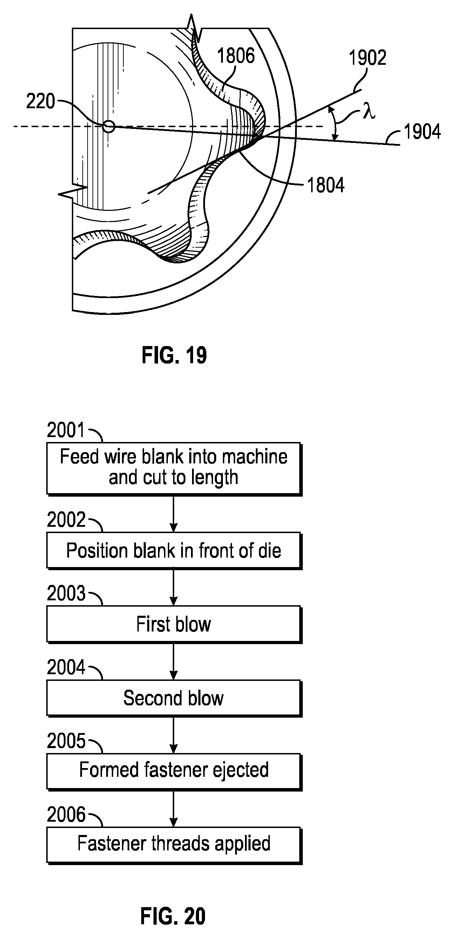

Referring now to Figures 18 and 19, and with continued reference to the discussion above regarding recessed socket area 110 of the fastener 1800, in the alternative embodiment the wall 218 of the recessed socket area 110 may comprise six asymmetrical socket torque surfaces 1802 suitably configured to mate to the tapered sidewall 1102 of the driver 1100. For example, each asymmetrical socket torque surface 1802 may comprise a driving surface 1804 and a removal surface 1806 forming a substantially mirror image of the fins 1108 of the driver 1100. In this way, the driving surface 1804 and the removal surface 1806 are configured to receive the driving face 1110 and the removal face 1112 such that there may be upwards of 95-100% percent surface contact between the two devices in all directions when the driver 1100 is inserted into the recessed socket area 110 of the fastener 1800.

In essence, contrary to the commonly known Torx® style system, there is no inherent gap or space between the contact surfaces absent the presence of a torque force. However, the asymmetrical socket torque surfaces 1802 are suitably configured to receive a standard Torx® style bit and provide an increased contact area between the driving surface 1804 and the standard bit as compared to the amount of surface contact between the standard bit and a standard Torx® style screw head. Further, the torque surfaces 1802 may provide a "stick-fit" when the standard Torx® style bit is inserted into the recessed socket area 110.

The driving surface 1804 may provide a substantially flat contact area for receiving an applied torque from the driver 1100. Similar to the driving face 1110 of the driver 1100, the driving surface 210 may form a plane 1902 that is offset by an angle λ relative to a radial line 1904 extending from the longitudinal axis 220 to a leading edge of the driving surface 1804. The angle λ may comprise any suitable angle between about five degrees and about twenty-five degrees relative to the radial line 1904 and may further be identical to the angle β of the driver 1100. In one embodiment, the angle λ of the driving surface 1804 may be set at about fifteen degrees. In a second embodiment, the angle λ of the driving surface 1804 may be set at about twelve and one-half degrees. In yet another embodiment, the angle λ of the driving surface 1804 may be set at about eighteen and one-half degrees.

In addition, the removal surface 1806 may be configured to taper away from the driving surface 1804 similar to the mating driver 1100 surface such that the removal surface 1806 forms a curved surface extending between an outermost surface 1808 and an innermost surface 1810 of the recessed socket area 110. The removal surface 1806 may also be configured to taper away from the driving surface 1804 by a greater amount at the top edge 206 than at the bottom edge 208. As a result, a radius at the outermost surface 1808 of each socket torque surface 1802 may decrease in width from the top edge 206 to the bottom edge 208.

The recessed socket area 110 may be formed by any suitable method such as by forming, forging, casting, cutting, grinding, milling, and the like. In one embodiment, the fastener 104 and the recessed socket area 110 may be formed through a metal operation such as cold heading. For example, referring now to Figure 20, a wire blank may be fed into a heading machine and cut to a predetermined length (2001). The wire blank may then be positioned in front of a die (2002). The wire blank may then be forced into the die by an upset tool in a first blow forming an intermediate shape (2003). A second blow may be applied to the intermediate shape with a hammer that is suitably configured to form a head height and a diameter of the head portion 108 of the fastener 104 (2004). The hammer may also comprise a drive suitably configured to form the recessed socket area 110 during the second blow. The fastener 104 may then be ejected from the header machine (2005) and moved to a subsequent operation such as to have threads applied to the shank portion 106 (2006). Subsequently, the drive may be subjected to additional operations to transform the drive into the driver 102 that will be used to apply the torque force to the fastener 104. Therefore, the dimensions of the wall 218 and the recessed torque surfaces 204 will be identical to the dimensions of the torque surface 702 since the driver 102 was used to form the recessed socket area 110.

The particular implementations shown and described are illustrative of the invention and its best mode and are not intended to otherwise limit the scope of the present invention in any way. Indeed, for the sake of brevity, conventional manufacturing, connection, preparation, and other functional aspects of the system may not be described in detail. Furthermore, the connecting lines shown in the various figures are intended to represent exemplary functional relationships and/or steps between the various elements. Many alternative or additional functional relationships or physical connections may be present in a practical system.

In the foregoing specification, the invention has been described with reference to specific exemplary embodiments. Various modifications and changes may be made, however, without departing from the scope of the present invention as set forth in the claims. The specification and figures are illustrative, rather than restrictive, and modifications are intended to be included within the scope of the present invention. Accordingly, the scope of the invention should be determined by the claims and their legal equivalents rather than by merely the examples described.

For example, the steps recited in any method or process claims may be executed in any order and are not limited to the specific order presented in the claims. Additionally, the components and/or elements recited in any apparatus claims may be assembled or otherwise operationally configured in a variety of permutations and are accordingly not limited to the specific configuration recited in the claims.

Benefits, other advantages and solutions to problems have been described above with regard to particular embodiments; however, any benefit, advantage, solution to problem or any element that may cause any particular benefit, advantage or solution to occur or to become more pronounced are not to be construed as critical, required or essential features or components of any or all the claims.

As used herein, the terms "comprise", "comprises", "comprising", "having", "including", "includes" or any variation thereof, are intended to reference a non-exclusive inclusion, such that a process, method, article, composition or apparatus that comprises a list of elements does not include only those elements recited, but may also include other elements not expressly listed or inherent to such process, method, article, composition or apparatus. Other combinations and/or modifications of the above-described structures, arrangements, applications, proportions, elements, materials or components used in the practice of the present invention, in addition to those not specifically recited, may be varied or otherwise particularly adapted to specific environments, manufacturing specifications, design parameters or other operating requirements without departing from the general principles of the same.

## Claims

1. A fastening device having a head portion with a socket area extending into the head portion and a shank sharing a longitudinal axis with the socket area, comprising:
a wall defining the recessed socket area having a top edge and a bottom edge, wherein the wall tapers inward between about one and five degrees towards the longitudinal axis from the top edge to the bottom edge such that a cross-sectional area of the socket area decreases from the top edge to the bottom edge; and
a plurality of socket torque surfaces disposed along the wall, wherein each socket torque surface comprises:
a driving surface disposed along a first side of the socket torque surface and extending between the top edge and the bottom edge, wherein the driving surface comprises a substantially flat contact area angled between about five degrees and about twenty-five degrees relative to a radial line extending outward from the longitudinal axis through a leading edge of the driving surface at the top edge;
a removal surface disposed along a second side of the socket torque surface and extending between the top edge and the bottom edge, wherein:
the removal surface tapers away from the of the driving surface at the top edge; and
the removal surface is separated from the driving surface by a shorter distance at the bottom edge than at the top edge relative to the leading edge of the driving surface at the top edge.

2. A fastening device according to claim 1, wherein plurality of socket torque surfaces equals six surfaces spaced equidistant around the longitudinal axis.

3. A fastening device according to claim 1 or 2, wherein the driving surface is angled about fifteen degrees relative to the radial line.

4. A fastening device according to any of claims 1 to 3, wherein the substantially flat contact area comprises a constant geometry between the bottom edge and the top edge.

5. A fastening device according to any of claims 1 to 4, wherein the substantially flat contact area comprises a uniform vertical height between the bottom edge and the top edge.

6. A fastening device according to any of claims 1 to 5, wherein each socket torque surface:
comprises a first width at the top edge; and
comprises a second width at the bottom edge, wherein the second width is less than the first width.

7. A fastening device according to any of claims 1 to 6, wherein the driving surface of a first socket torque surface at the top edge is separated from the driving surface of a second socket torque surface at the top edge by the same amount that the driving surface of the first socket torque surface at the bottom edge is separated from the driving surface of the second socket torque surface at the bottom edge.

8. A driver for a fastening device, comprising:
a sidewall extending between a base portion of the driver and an end portion of the driver, wherein the sidewall tapers inward from the base portion to the end portion towards a longitudinal axis of the driver by an angle of between about one degree and about five degrees; and
a plurality of fins extending outward from the sidewall, wherein each fin comprises:
a driving face disposed along a first side of the fin between the base portion and the end portion, wherein the driving face comprises a substantially flat contact area angled between about five degrees and about twenty-five degrees relative to a radial line extending outward from the longitudinal axis of the driver to a leading edge of the driving face;
a removal face disposed along a second side of the fin between the base portion and the end portion, wherein:
the removal face tapers away from the leading edge of the driving face; and
the removal face is separated from the driving wall by a greater distance at the base portion than at the end portion relative to the leading edge of the driving face.

9. A driver for a fastening device according to claim 8, wherein plurality of fins equals six surfaces spaced equidistant around the longitudinal axis.

10. A driver for a fastening device according to claim 8 or 9, wherein the driving face is angled about fifteen degrees relative to the radial line.

11. A driver for a fastening device according to any of claims 8 to 10, wherein:
the driving face of each fin at the base portion comprises a bulge and the end portion of the driver configured to align the driving face at the base portion with the driving face at the end portion to form the substantially flat contact area; and
the bulge becomes less pronounced as the driving face progresses from the base portion to the end portion.

12. A driver for a fastening device according to any of claims 8 to 11, wherein the substantially flat contact area comprises at least one of:
a constant geometry between the base portion and the end portion of the driver; and
a uniform vertical height between the base portion and the end portion of the driver.

13. A driver for a fastening device according to any of claims 8 to 12, wherein each fin comprises:
a first width at the base portion; and
a second width at the end portion, wherein:
the second width is less than the first width; and
the removal face of a first fin tapers away from the driving face of a second fin as the removal face progresses from the base portion to the end portion.

14. A driver for a fastening device according to claim 13, wherein the driving face of the first fin at the base portion is separated from the driving face of the second fin at the base portion by the same amount that the driving face of the first fin at the end portion is separated from the driving face of the second fin at the end portion.

15. A fastening system, comprising:
the driver of any of claims 8 to 14; and
a fastener having a head portion with a recessed socket area extending into the head portion, wherein:
the recessed socket area of the fastener comprises a wall defining the recessed socket area;
the wall is configured to conform to the plurality of fins of the driver; and
the driver is configured to insertably mate with the socket area.
